# EUROPÄISCHE PATENTSCHRIFT

(11) **EP 1 164 042 B1**
(45) Veröffentlichungstag und Bekanntmachung des Hinweises auf die Patenterteilung: **29.12.2004**
(21) Anmeldenummer: 01114217.1
(22) Anmeldetag: 12.06.2001
(51) Int. Cl.: B60J 7/12, B60J 7/08

(54) **Cabriolet-Fahrzeug**
Convertible vehicle
Véhicule convertible

(30) Priorität: 15.06.2000 DE 10029472
(43) Veröffentlichungstag der Anmeldung: 19.12.2001
(73) Patentinhaber: Wilhelm Karmann GmbH, D-49084 Osnabrück (DE)
(72) Erfinder: Rothe, Karl, 49597 Rieste (DE); Russke, Klaus, 49143 Bissendorf (DE)
(74) Vertreter: Busse & Busse Patentanwälte

(56) Entgegenhaltungen:
- EP-A- 0 332 810
- EP-A- 0 760 301
- DE-U- 29 901 589
- US-A- 4 784 428

## Beschreibung

Die Erfindung betrifft ein Cabriolet-Fahrzeug mit einem eine flexible Dachhaut mit formstabiler Heckscheibe aufweisenden Faltverdeck, gemäß dem Oberbegriff des Anspruchs 1.

Bei einem bekannten Cabriolet-Fahrzeug dieser Art (DE-AS 11 79 125) weist das im wesentlich spiegelbildlich zur Fahrzeuglängsmittelebene ausgebildete und in einem jeweiligen Hauptlager schwenkbar abgestützte Verdeckgestell einen eine Heckscheibe formstabil umfassenden Rahmen auf, der in einer Schließstellung mittels scherenartig verbundener Lenker fixierbar, mit diesen horizontal zum Verdeckgestell hin verlagerbar und danach in den Verdeckkasten einschwenkbar ist. Der Verdeckstoff ist dabei im heckseitigen Bereich durch eine Faltung zusätzlich belastet, die horizontale Verschiebbarkeit erfordert eine im wesentlichen vertikal verlaufende Heckscheibe und deren unterer Randbereich ist beim Schließvorgang von innen an den Karosserierand heranzuführen, so daß zum Erreichen der Dichtigkeit eine aufwendige Steuerung erforderlich ist.

Die Erfindung befaßt sich mit dem Problem, ein Cabriolet-Fahrzeug der angegebenen Art zu schaffen, dessen an eine aerodynamisch flache Verdeckkontur anpaßbare Heckscheibenhalterung ohne zusätzlichen Antriebs- und Steuerungsaufwand schwenkbar ist, dabei der Verdeckstoff nur geringe Faltbewegungen erfährt und karosserieseitig mit geringem Aufwand ein zuverlässig dichter Verschluß erreicht ist.

Die Erfindung löst diese Aufgabe durch ein Cabriolet-Fahrzeug mit den Merkmalen des Anspruchs 1. Hinsichtlich wesentlicher weiterer Ausgestaltungen des erfindungsgemäßen Cabriolet-Fahrzeuges wird auf die Ansprüche 2 bis 8 verwiesen.

Bei dem erfindungsgemäßen Cabriolet-Fahrzeug ist die dreiseitig in einem Rahmen gehaltene Heckscheibe im Bereich ihres unteren Querseitenrandes unmittelbar auf dem Verdeckspannbügel abgestützt, wobei dieser mit dem Rahmen ein als einteilige Baueinheit verlagerbares Gestellteil bildet. Durch den bis auf den bügelförmigen Teilbereich der Baueinheit heruntergeführten Querseitenrand der Heckscheibe ist deren Gesamtfläche vorteilhaft nach unten hin vergrößert und damit die Durchsicht im Heckbereich des Cabriolet-Fahrzeuges insgesamt auch für Fahrzeuge mit aerodynamischer flacher Verdeckkontur verbessert.

Die Heckscheibe bzw. diese insgesamt mit dem Rahmenteil als Baueinheit ist in den Verdeckbezug so integriert, daß bei Bewegung des Verdecks in Öffnungs- oder Schließstellung wirksamen Verdeckstoffspannungen in der Dachhaut durch den formstabilen Aufbau der Baueinheit optimal verteilt werden und Überbelastungen vermieden sind. Mit dieser Gestaltung des Heckbereichs des Faltverdecks können unterschiedliche Anforderungen an das Design und die aerodynamische Konturgestaltung von Fahrzeugen auch bei insgesamt niedriger Fahrzeughöhe mit geringem Aufwand erfüllt werden.

Die aus dem Rahmen und dem Verdeckspannbügel einstückig geformte Baueinheit kann mit geringem technischen Aufwand in das kinematische Konzept des Verdeckgestells integriert und gemeinsam mit der Dachhaut des Faltverdecks in einen heckseitigen Verdeckkasten abgelegt werden. Eine besonders stabile und schwenkbare Abstützung der Gestell-Baueinheit ist dadurch erreicht, daß deren oberer Teil mit jeweiligen Gestängeteilen des Verdecks zusammenwirkt und die unteren, bügelförmig verlaufenden Seitenstreben der Baueinheit im Bereich des Hauptlagers schwenkbeweglich an der Fahrzeugkarosserie durch entsprechende Stützverbinder abgestützt werden, wobei in diesem Bereich auch eine höhenveränderbare Abstützung vorgesehen sein kann.

Die schwenkbare Gestell-Baueinheit wirkt mit einem hinteren Verdeckkastendeckel zusammen, der in Schließstellung von oben auf die Basisstrebe bzw. die Seitenschenkel des Gestells so auflegbar ist, daß mit geringem Steuerungsaufwand ein zuverlässig dichter Verschluß zum Innenraum der Karosserie erreicht ist.

Hinsichtlich weiterer Einzelheiten und vorteilhafter Ausgestaltungen der Erfindung wird auf die nachfolgende Beschreibung und die Zeichnung verwiesen, in der das erfindungsgemäße Cabriolet-Fahrzeug mit der einstückigen Baueinheit anhand eines Ausführungsbeispiels näher erläutert ist. In der Zeichnung zeigen:
- Fig. 1: eine perspektivische Heckansicht eines Cabriolet-Fahrzeuges mit dem Faltverdeck in Schließstellung,
- Fig. 2: eine Prinzipdarstellung eines ein heckseitigen Gestellteil aufweisenden Verdeckgestells gemäß Fig. 1 in einer Seitenansicht,
- Fig. 3: das Verdeckgestell gemäß Fig. 2 in einer Öffnungsphase,
- Fig. 4: das Verdeckgestell gemäß Fig. 2 bzw. 3 in einer heckseitigen Öffnungsstellung, und
- Fig. 5: eine Einzeldarstellung des im Bereich der Heckscheibe als Baueinheit vorgesehenen Gestellteils.

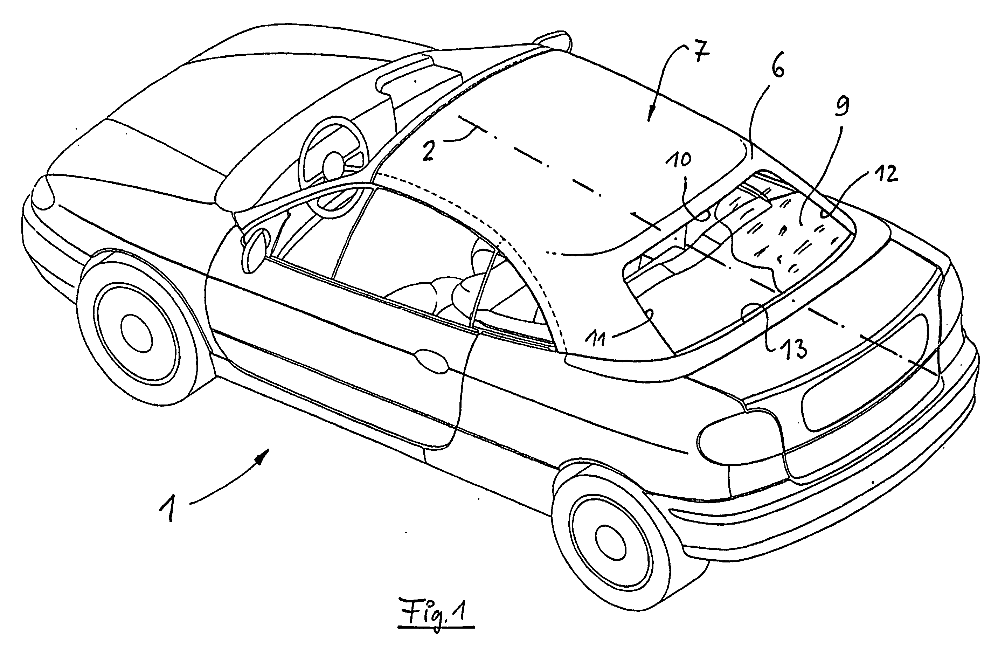

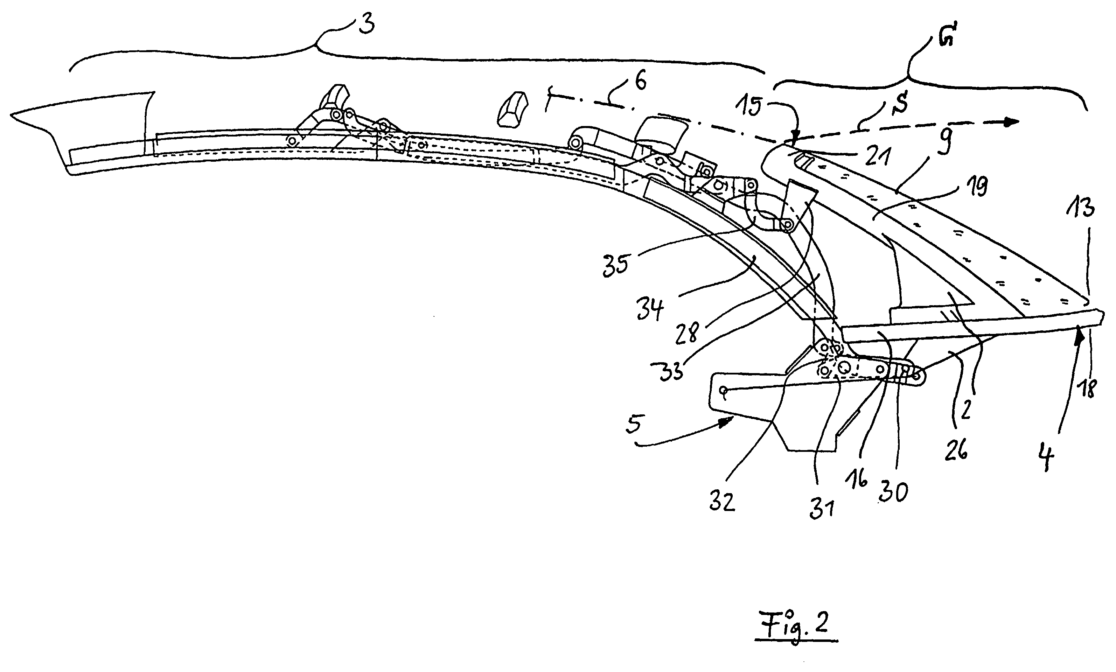

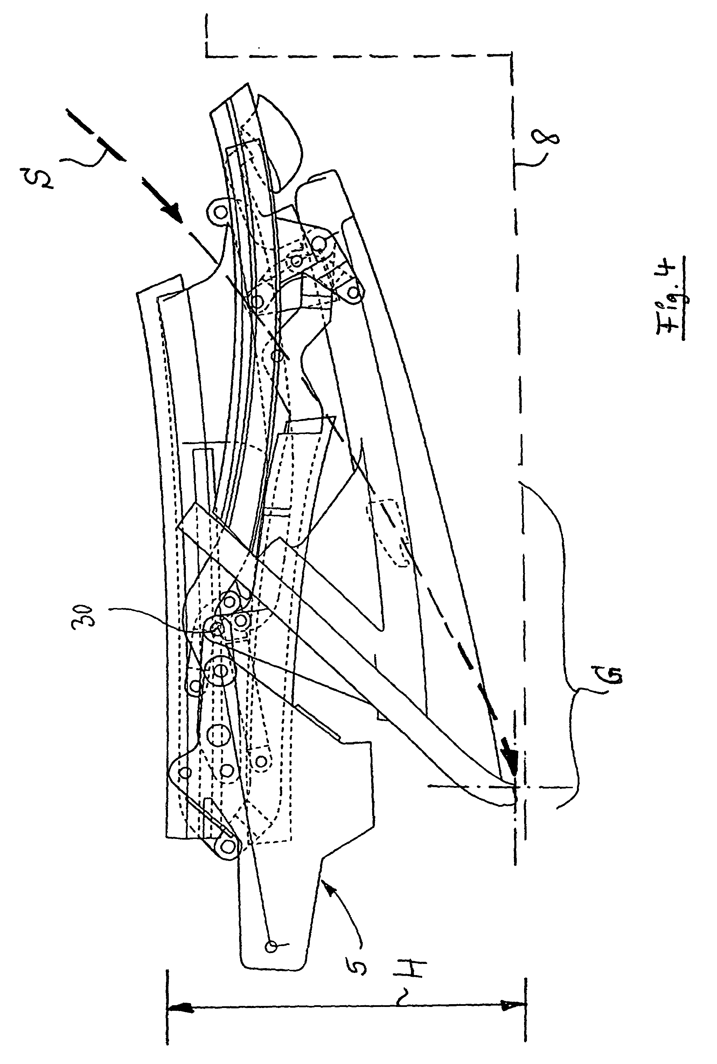

In Fig. 1 ist ein insgesamt mit 1 bezeichnetes Cabriolet-Fahrzeug dargestellt, dessen spiegelbildlich zur Fahrzeuglängsmittelebene aufgebautes Verdeckgestell 3 (Fig. 2) einen heckseitigen Verdeckspannbügel 4 aufweist. Bei Verlagerung um ein karosseriefestes Hauptlager 5 ist das eine flexible Dachhaut 6 aufweisende Faltverdeck 7 mitsamt dem Verdeckgestell 3 in einem Verdeckkasten 8 (Fig. 4) ablegbar bzw. aus diesen in die Schließstellung rückführbar. Das Faltverdeck 7 ist im Heckbereich seiner flexiblen Dachhaut 6 mit einer oberhalb des Verdeckspannbügels 4 verlaufenden, insbesondere als Festglasscheibe ausgebildeten Heckscheibe 9 mit im wesentlichen rechteckiger Umfangskontur versehen.

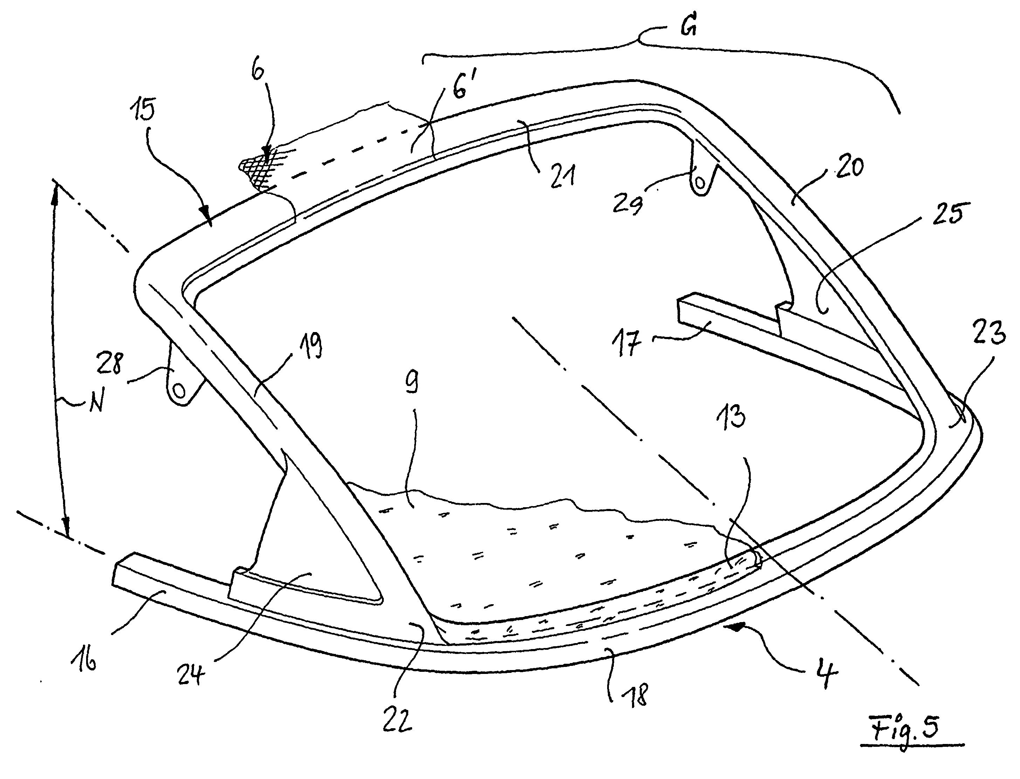

Das erfindungsgemäß ausgebildete Cabriolet-Fahrzeug 1 ist mit einer Heckscheibe 9 versehen, die nur im Bereich des oberen Querseitenrandes 10 sowie ihrer beiden zur Fahrzeugslängsmittelebene 2 parallelen Längsseitenränder 11 und 12 eine die flexible Dachhaut 6 erfassende Anbindung aufweist. Mit ihrem unteren Querseitenrand 13 ist die Heckscheibe 9 unmittelbar auf dem Verdeckspannbügel 4 abgestützt (Fig. 5), wobei dieser mit einem die Heckscheibe 9 aufnehmenden und mit der Dachhaut 6 verbundenen U-förmigen Rahmen 15 eine formstabile Baueinheit G bildet.

Die Einzeldarstellung gemäß Fig. 2 verdeutlicht die Bauteile des Verdeckgestells 3, das im Heckbereich mit der insgesamt ein Gestellteil bildenden Baueinheit G versehen ist. Das Gestellteil G und die vorderen Teile des Verdeckgestells 3 können durch ein nicht näher dargestelltes Antriebsorgan bewegt und das gesamte Verdeckgestell 3 mit dem Gestellteil G gemeinsam in die gemäß Fig. 4 dargestellte Öffnungsstellung verlagert werden.

In der dargestellten Ausführungsform ist die Heckscheibe 9 über entsprechende, nicht näher dargestellte Klebe-, Schraub-, und/oder Klemmverbindungen in den Rahmen 15 integriert. Denkbar ist dabei auch, daß die Heckscheibe 9 zumindest bereichsweise lösbar in dem Gestellteil G bzw. dem Rahmen 15 gehalten ist (nicht dargestellt).

Die Einzeldarstellung gemäß Fig. 5 verdeutlicht, daß das Gestellteil G mit die Konturform des an sich bekannten Verdeckspannbügels 4 bildenden Seitenstreben 16, 17 und einer zwischen diesen verlaufenden Basisstrebe 18 versehen ist. Im Übergangsbereich der beiden Seitenstreben 16 und 17 in die Basisstrebe 18 sind die beiden parallelen Seitenschenkel 19 und 20 des durch einen oberen Querschenkel 21 geschlossenen Rahmens 15 abgestützt. Der U-förmige Rahmen 15 kann in zweckmäßiger Ausführung im Bereich seiner parallelen Seitenschenkel 19 und 20 jeweils endseitig in Verbindungsbereichen 22 und 23 mit der Basisstrebe 18 des Verdeckspannbügels 4 verschweißt sein. Sämtliche dieser Strebenteile können dabei aus Aluminium-Strangprofilen, Preßprofilteilen, Rollprofilen o. dgl. gefertigt und über Schweißverbindungen verbunden werden.

In zweckmäßiger Ausführung ist das Gestellteil G als eine einstückige Baueinheit ausgebildet, wobei insbesondere eine Fertigung als Aluminium-Druckgußteil denkbar ist.

Das Gestell G ist im Verbindungsbereich der Seitenschenkel 19, 20 des Rahmens 15 zur Basisstrebe 18 hin jeweils mit einem das Gestell G insgesamt aussteifenden Stützwinkelteil 24, 25 versehen, so daß zwischen diesen beiden Funktionsträgern der Baueinheit ein fester Winkel gebildet ist und die Stützwinkelteile 24, 25 die Einbauneigung (Winkel N) des Rahmens 15 im Gesamtkonzept des Fahrzeugs definieren. Mit den Stützwinkelteilen 24 und 25 wird das Gestellteil G insgesamt ausgesteift und in Schließstellung des Verdecks 7 wird die Dachhaut 6 formgebend und straff untergriffen.

In der Einbaulage des Gestells G ist der U-förmige Rahmen 15 im Bereich des oberen Querschenkels 21 und der beiden Seitenschenkel 19 und 20 von der Dachhaut 6 des Faltverdecks 7 übergriffen (Fig. 5, Ausschnittsdarstellung der Dachhaut 6 mit Verbindungsrand 6'). Dabei ist eine Verbindung der Dachhaut 6 am Rahmen durch eine Naht-, Schraub-, Klebe-, oder Klemmverbindung denkbar und auch im Bereich der Seitenstreben 16 bzw. 17 ist die Dachhaut über nicht näher dargestellte Keder festgelegt.

Die Seitenansichten gemäß Fig. 2 bis 4 verdeutlichen, daß das einstückige Gestellteil G durch die von der Basisstrebe 18 abragenden Seitenstreben 16 und 17 mit dem Hauptlager 5 über einen Verbindungsansatz 26 und 27 (nicht dargestellt) verbunden sind. Im Bereich der Seitenschenkel 19 des U-förmigen Rahmens 15 ist über zwei Verbindungsflansche 28 und 29 die Anlenkung an das Verdeckgestell 3 hergestellt.

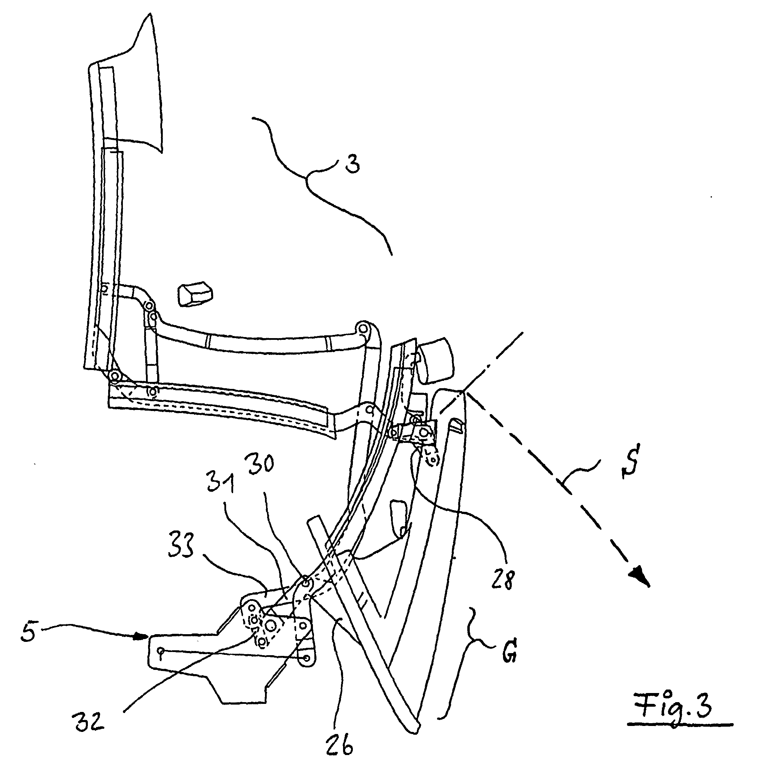

Die Bewegungsphasen dieser Konstruktion gemäß Fig. 3 und 4 verdeutlichen, daß das Gestell G ausgehend von der Schließstellung gemäß Fig. 2 um das Hauptlager 5 mehr als 90°C verschwenkt wird (Schwenkbahn S). Um eine möglichst flache Einbaulage des Gestellteils G und der verschwenkten Teile des Verdeckgestells 3 zu erreichen (Höhe H, Fig. 4), ist eine Verlagerung des Drehpunktes 30 des Verbindungsansatzes 26 während der Schwenkbewegung vorgesehen, so daß die Bauteile insgesamt eine geringe Eintauchtiefe in die Karosserie des Fahrzeugs aufweisen.

Im Bereich des Hauptlagers 5 wird der Drehpunkt 30 durch einen am Hauptlager 5 vorgesehenen Hebel 31 verlagert, der durch einen Lenker 32 mit einer am Verdeckgestell 3 vorgesehenen Führungsstrebe 33 verbunden ist. Der vordere Verbindungsflansch 28 bzw. 29 ist direkt mit den Dachrahmenteilen des Verdecks 3 verbunden bzw. an dessen Hauptsäule 34 durch einen Schwinghebel 35 angelenkt.

Die vorbeschriebene Verdeckkonstruktion mit dem Gestell G kann bei entsprechender Fahrzeugdimensionierung vollständig in den Verdeckkasten 8 abgesenkt und über eine entsprechende Abdeckung, beispielsweise einen Verdeckkastendeckel (nicht dargestellt) verschlossen werden. Denkbar ist dabei auch, daß das Verdeck 7 ähnlich der in Fig. 4 dargestellten Ausführung in den Verdeckkasten 8 eingelegt und der oberseitige Bereich der Bauteile durch eine nicht näher dargestellte Persenning abgedeckt wird.

In der Schließstellung des Gestells G (Fig. 2) ist dieses aus der in Fig. 4 dargestellten Öffnungsstellung hochgeschwenkt und der nicht näher dargestellte Verdeckkastendeckel liegt auf dem Bereich des Verdeckspannbügels 4 bzw. der Basisstrebe 18 und den Seitenschenkeln 16, 17 so auf, daß mit geringem Steuerungsaufwand ein zuverlässig dichter Verschluß erreicht ist.

## Patentansprüche

1. Cabriolet-Fahrzeug mit einem eine flexible Dachhaut (6) aufweisenden Faltverdeck (7), dessen spiegelbildlich zur Fahrzeuglängsmittelebene (2) aufgebautes Verdeckgestell (3) heckseitig einen eine formstabile Heckscheibe (9) umfassenden Rahmen (15) mit Seitenschenkeln (19, 20) und oberem Querschenkel (21) aufweist, wobei der Rahmen gemeinsam mit dem Faltverdeck (7) durch Verlagerung um ein karosseriefestes Hauptlager (5) in einem heckseitigen Verdeckkasten (8) ablegbar bzw. aus diesem rückführbar ist, **dadurch gekennzeichnet, daß** der als ein Gestellteil (G) ausgebildete Rahmen (15) im Bereich seiner Basisstrebe (18) eine nach Art eines Verdeckspannbügels (4) verlängerte Längskontur (16, 17) aufweist und das um mehr als 90° in die Öffnungsstellung verschwenkbare Gestellteil (G) durch Verbindungsteile (26, 27; 28, 29) unmittelbar an das Verdeckgestell (3) angelenkt ist.

2. Cabriolet-Fahrzeug nach Anspruch 1, **dadurch gekennzeichnet, daß** das Gestellteil (G) mit dem den oberen Querschenkel (21) sowie die Seitenschenkel (19, 20) aufweisenden U-förmigen Rahmen (15) und dem als dessen Basisstrebe (18) verlaufenden Verdeckspannbügel (4) eine einstückige Baueinheit bildet.

3. Cabriolet-Fahrzeug nach Anspruch 1 oder 2, **dadurch gekennzeichnet, daß** die Heckscheibe (9) zumindest bereichsweise lösbar mit dem Gestellteil (G) verbunden ist.

4. Cabriolet-Fahrzeug nach einem der Ansprüche 1 bis 3, **dadurch gekennzeichnet, daß** der U-förmige Rahmen (15) im Bereich seiner parallelen Seitenschenkel (19, 20) jeweils endseitig mit der Basisstrebe (18) bzw. dem integrierten Verdeckspannbügel (4) verschweißt ist.

5. Cabriolet-Fahrzeug nach einem der Ansprüche 1 bis 4, **dadurch gekennzeichnet, daß** im Verbindungsbereich (22, 23) der Seitenschenkel (19, 20) des Rahmens (15) zur Basisstrebe (18) jeweils ein das Gestell (G) zu den Seitenstreben (16, 17) hin aussteifendes Stützwinkelteil (24, 25) vorgesehen ist.

6. Cabriolet-Fahrzeug nach Anspruch 5, **dadurch gekennzeichnet, daß** die Stützwinkelteile (24, 25) die Einbauneigung (Winkel N) des Rahmens (15) defininieren.

7. Cabriolet-Fahrzeug nach einem der Ansprüche 1 bis 6, **dadurch gekennzeichnet, daß** der U-förmige Rahmen (15) im Bereich des oberen Querschenkels (21) und der beiden Seitenschenkel (19, 20) von der Dachhaut (6) des Faltverdecks (7) übergriffen ist.

8. Cabriolet-Fahrzeug nach einem der Ansprüche 1 bis 7, **dadurch gekennzeichnet, daß** das einstückige Gestellteil (G) durch die von der Basisstrebe (18) abragenden Seitenstreben (16, 17) im Bereich des Hauptlagers (5) abgestützt ist und zusätzlich die Seitenschenkel (19, 20) des U-förmigen Rahmens (15) am Verdeckgestell (3) durch die Verbindungsflansche (28, 29) angelenkt sind.

## Claims

1. Convertible vehicle having a folding top (7) having a flexible roof skin (6), of which folding top (7) the framework (3), which is constructed as a mirror image about the longitudinal centre plane (2) of the vehicle, has, at the rear of the vehicle, a frame (15) which encloses a non-deformable rear window (9) and which has side-limbs (19, 20) and a top cross-limb (21), the frame, together with the folding top (7), being able to be stowed away in a folding-top compartment (8) situated at the rear of the vehicle, or returned therefrom, by displacement about a main mounting (5) secured to the bodywork, **characterised in that** the frame (15), which is in the form of a part (G) of the framework, has in the region of its base member (18) a longitudinal contour (16, 17) which is elongated after the fashion of a folding-top tensioning bow (4), and the part (G) of the framework, which can be pivoted through more than 90° to the lowered position, is hinged directly to the framework (3) of the folding top by connecting members (26, 27; 28, 29).

2. Convertible vehicle according to claim 1, **characterised in that** the part (G) of the framework, which has the U-shaped frame (15) having the top cross-limb (21) and the side-limbs (19, 20) and which has the folding-top tensioning bow (4) which extends to form the base member (18) of the frame (15), forms a one-piece structural unit.

3. Convertible vehicle according to claim 1 or 2, **characterised in that** the rear window (9) is connected to the part (G) of the framework in such a way as detachable at least in regions.

4. Convertible vehide according to one of claims 1 to 3, **characterised in that** the U-shaped frame (15) is welded to the base member (18) or to the integral folding-top tensioning bow (4) in the region of its parallel side-limbs (19, 20) at the ends of each of the latter.

5. Convertible vehicle according to one of claims 1 to 4, **characterised in that**, in each region (22, 23) where the side-limbs (19, 20) of the frame (15) are connected to the base member (18), there is provided a supporting gusset (24, 25) which stiffens the framework (G) away from the side members (16, 17).

6. Convertible vehicle according to daim 5, **characterised in that** the supporting gussets (24, 25) define the angle (N) at which the frame (15) is fitted.

7. Convertible vehide according to one of daims 1 to 6, **characterised in that** the roof skin (6) of the folding top (7) fits over the U-shaped frame (15) in the region of the top cross-limb (27) and the two side-limbs (19, 20).

8. Convertible vehicle according to one of claims 1 to 7, **characterised in that** the one-piece part (G) of the framework is supported in the region of the main mounting (5) by the side members (16, 17) projecting from the base member (18), and the side-limbs (19, 20) of the U-shaped frame (15) are in addition hinged to the framework (3) of the folding top by the connecting lugs (28, 29).

## Revendications

1. Véhicule convertible comportant une capote pliante (7) présentant une couverture de toit flexible (6), dont l'armature de capote (3) symétrique par rapport au plan médian longitudinal du véhicule (2) présente à l'arrière un cadre (15) entourant une vitre arrière (9) indéformable et doté de barres latérales (19, 20) et d'une barre transversale supérieure (21), le cadre pouvant être rangé conjointement avec la capote pliante (7) par déplacement autour d'un palier principal (5) fixé à la carrosserie, dans un compartiment de capote (8) ou être sorti de celui-ci,
**caractérisé en ce que**
le cadre (15) configuré sous forme de partie d'armature (G) présente, dans la zone de son renfort de base (18), un contour longitudinal (16, 17) allongé à la façon d'un arceau de tension de capote (4), et la partie d'armature (G) pouvant pivoter de plus de 90° pour adopter la position d'ouverture est articulée directement au niveau de l'armature de capote (3) par de pièces de raccordement (26, 27 ; 28, 29).

2. Véhicule décapotable selon la revendication 1,
**caractérisé en ce que**
la partie d'armature (G) forme un module fait d'une seule pièce, avec le cadre (15) en forme de U présentant la barre transversale supérieure (21) ainsi que les barres latérales (19, 20) et avec l'arceau de tension de capote (4) s'étendant sous forme de son renfort de base (18).

3. Véhicule décapotable selon la revendication 1 ou 2,
**caractérisé en ce que**
la vitre arrière (9) est reliée au moins dans certaines zones de façon amovible à la partie d'armature (G).

4. Véhicule décapotable selon l'une des revendications 1 à 3,
**caractérisé en ce que**
le cadre (15) en forme de U est soudé, dans la zone de ses barres latérales parallèles (19, 20) respectivement du côté des extrémités, avec le renfort de base (18) ou l'arceau de tension de capote (4) intégré.

5. Véhicule décapotable selon l'une des revendications 1 à 4,
**caractérisé en ce que**
dans la zone de raccordement (22, 23) entre les barres latérales (19, 20) du cadre (15) et le renfort de base (18), il est respectivement prévu une pièce angulaire de support (24, 25) rigidifiant l'armature (G) par rapport aux renforts latéraux (16, 17).

6. Véhicule décapotable selon la revendication 5,
**caractérisé en ce que**
les pièces angulaires de support (24, 25) définissent l'inclinaison de montage (angle N) du cadre (15).

7. Véhicule décapotable selon l'une des revendications 1 à 6,
**caractérisé en ce que**
le cadre (15) en forme de U est recouvert dans la zone de la barre transversale supérieure (21) et des deux barres latérales (19, 20) par la couverture de toit (6) de la capote pliante (7).

8. Véhicule décapotable selon l'une des revendications 1 à 7,
**caractérisé en ce que**
la partie d'armature (G) faite d'une seule pièce est soutenue dans la zone du palier principal (5) par les renforts latéraux (16, 17) s'étendant à partir du renfort de base (18) et en outre, les barres latérales (19, 20) du cadre (15) en forme de U sont articulées au niveau de l'armature de capote (3) par le biais des embouts de raccordement (28, 29).
